# EUROPÄISCHE PATENTANMELDUNG

(11) **EP 1 610 117 A2**
(43) Veröffentlichungstag der Anmeldung: **28.12.2005**
(21) Anmeldenummer: 05020027.8
(22) Anmeldetag: 04.12.1997
(51) Int. Cl.: G01N 21/64

(54) **Lichtabtastvorrichtung**

(30) Priorität: 24.02.1997 DE 19707226
(62) Teilanmeldung aus: 97953740.4
(71) Anmelder: BODENSEEWERK PERKIN-ELMER GMBH, D-88662 Überlingen (DE)
(72) Erfinder: Wulf, Jürgen, 88662 Überlingen (DE); Steinwand, Michael, 88696 Owingen (DE); Klemm, Henry, 88662 Überlingen (DE)
(74) Vertreter: Grünecker, Kinkeldey, Stockmair & Schwanhäusser Anwaltssozietät

(57) **Zusammenfassung**

Die Erfindung betrifft eine Lichtabtastvorrichtung , welche eine Probenhalterungsvorrichtung zur lösbaren Halterung einer Probe und optische Elemente umfasst. Die optischen Elemente umfassen eine Vielzahl von Lichtquellen, wobei jede Lichtquelle ein Anregungslicht mit Emissionslichtwellenlängen bereitstellt, welche zur Anregung unterschiedlicher Fluorophore in der Probe und zur Erzeugung von Fluoreszenzlicht geeignet sind. Ferner umfassen die optischen Elemente eine Fokussierungsoptik zur Fokussierung des Anregungslichtes auf ein Teilgebiet der Probe. Ferner umfassen die optischen Elemente eine Nachweiseinheit mit einer Erfassungsoptik zur Fokussierung von Fluoreszenzlicht, welches durch die unterschiedlichen Fluorophore emittiert wird und einem Detektor zur Umwandlung des fokussierten Fluoreszenzlichts in elektrische Signale. Die Probenhalterungsvorrichtung und die Fokussierungsoptik sind eingerichtet, eine relative Bewegung zwischen den optischen Elementen und der Probenhalterung in Form einer kreisförmigen und linearen Bewegung zu ermöglichen, um unterschiedliche Teilgebiete der Probe mit dem Anregungslicht zur Aussendung von Fluoreszenzlicht anzuregen. Die kreisförmige Bewegung wird durch Drehung der Probenhalterungsvorrichtung um eine Drehachse oder durch Drehung der Fokussierungsoptik erreicht und die lineare Bewegung wird jeweils durch lineare Verschiebung der Fokussierungsoptik radial bezüglich der Drehachse der Probenhalterungsvorrichtung oder durch lineare Verschiebung der Probenhalterungsvorrichtung in radialer Richtung bezüglich der Drehachse der Fokussierungsoptik erreicht.

## Beschreibung

Die vorliegende Erfindung betrifft eine Lichtabtastvorrichtung zur Anregung und Detektion von Sekundärlicht, insbesondere von Fluoreszenzlicht, von einer Probe mit einer Lichtemissionsvorrichtung zur Aussendung von Anregungslicht mit einer für eine Sekundärlichtanregung auf oder in der Probe geeigneten Wellenlänge, einer Fokussierungsoptik zur Fokussierung des Anregungslichts auf die Probe, einer Probenhalterungsvorrichtung zur lösbaren Halterung der Probe, einer Nachweiseinheit mit einer Erfassungsoptik für das bei Anregung von der Probe emittierte Sekundärlicht und mit einer Detektorvorrichtung zur Umwandlung des Sekundärlichts in elektrische Signale.

Derartige Lichtabtastvorrichtungen werden beispielsweise für molekularbiologische oder gentechnische Untersuchungen verwendet. Dabei wird eine Vielzahl von zu untersuchenden Stoffen feldartig auf einem Träger aufgebracht und mit einem fluoreszierenden Markierungsstoff vorübergehend in Kontakt gebracht. Diejenigen zu untersuchenden Stoffe, die eine Affinität zum Markierungsstoff aufweisen, binden den Markierungsstoff an sich und können folglich zur Emission von Fluoreszenzlicht angeregt werden. Durch die Anregbarkeit der Fluoreszenz wird somit die Eigenschaft des zu untersuchenden Stoffs, den Markierungsstoff an sich zu binden, sichtbar, wodurch Rückschlüsse auf die Art des Probenstoffs gezogen werden können.

Bei mikrobiologischen oder gentechnischen Untersuchungen werden große Felder solcher mit Fluoreszenzstoffen markierter Stoffe mit Anregungslicht sequentiell abgetastet. Bei bisher bekannten Vorrichtungen erfolgte die Abtastung des die Probenstoffe haltenden Trägers mittels zweier im optischen Weg des Anregungslichts vorhandener Kippspiegel, die zwei zueinander senkrechte Drehachsen aufweisen. Wenn der Abtastlichtstrahl auf eine Stelle mit einer markierten und somit fluoreszierenden Probensubstanz trifft, wird Sekundärlicht ausgesendet, das von einer Nachweiseinheit mit einer Erfassungsoptik und einer Detektorvorrichtung erfasst und in elektrische Signale umgewandelt wird.

Bei derartigen Vorrichtungen ist jedoch die Drehung der Kippspiegel zur Abtastung toleranzbehaftet, was aufgrund des langen Strahlwegs zu großen Ungenauigkeiten in der Ortsauflösung der Abtastung führt. Weiter ist es bei einer "Pre-Objective-Scanning"-Anordnung der Fokussierungsoptik (d.h. zwischen der Abtasteinheit und der Probe) notwendig, dass diese einen großen Durchmesser aufweist, um das durch die Abtastspiegel von der optischen Achse abgelenkte Lichtstrahlenbündel in die Probenebene abzubilden. Bei solchen Objektiven mit einem großen Durchmesser ist jedoch eine Korrektur für große Bildwinkel und eine gute Bildfeldebnung sehr aufwendig und folglich mit erhöhten Kosten verbunden.

Es ist daher eine Aufgabe der vorliegenden Erfindung, eine Lichtabtastvorrichtung der eingangs genannten Art zu schaffen, mit der eine verbesserte Ortsauflösung bei vereinfachtem optischen Aufbau möglich ist.

Erfindungsgemäß wird diese Aufgabe gelöst durch eine Lichtabtastvorrichtung der eingangs genannten Art, die sich dadurch auszeichnet, dass die Probenhalterungsvorrichtung drehbar ist zur Drehung der Probe relativ zu dem Anregungslicht derart, dass unterschiedliche Teilgebiete der Probe mit dem Anregungslicht zur Aussendung von Sekundärlicht anregbar sind.

In einer weiteren erfindungsgemäßen Lösung dieser Aufgabe zeichnet sich die eingangs genannte Lichtabtastvorrichtung dadurch aus, dass die Fokussierungsoptik drehbar gehaltert ist zur Führung des Anregungslichts entlang eines Kreisbogens auf der Probe.

Gemäß diesen beiden Lösungen wird das bisher bekannte Abtastsystem unter Verwendung von Kippspiegeln ersetzt durch eine mechanische Drehung entweder der Probe oder des Abtastlichtstrahls, wodurch jeweils ein Kreisbogen auf der Probenfläche abgetastet wird. Eine gemäß dem Galvanometerprinzip auftretende Verstärkung von Ungenauigkeiten bzw. Toleranzen bei der Verdrehung der Kippspiegel in den bisher bekannten Abtastvorrichtungen, die zu relativ großen Ungenauigkeiten in den Lagekoordinaten des Abtaststrahls auf der Probe führen, ist in der erfindungsgemäßen Vorrichtung ausgeschlossen, da die Strahlachse gegenüber der Probenfläche nicht verkippt wird. Somit können durch die erfindungsgemäßen Vorrichtungen hohe Ortsauflösungen von bis zu 2 µm, z.B. bei Verwendung einer geeigneten Laserdiode als Lichtemissionsvorrichtung, erzielt werden. Außerdem kann die Fokussierungsoptik zur Fokussierung des Anregungslichts auf ein Teilgebiet der Probe aus einem relativ kostengünstigen Objektiv mit kleinem Durchmesser und einem kleinen korrigierten Feldbereich bestehen. Dadurch lassen sich hohe Kosteneinsparungen bei der erfindungsgemäßen Vorrichtung durch Verwendung einer einfachen und billigen Fokussierungsoptik und den Wegfall der aufwendigen Halterungen und Ansteuerungen für die Kippspiegel erzielen.

In einer vorteilhaften Weiterbildung der Erfindung ist die Fokussierungsoptik radial bezüglich der Drehachse der Probenhalterung verschiebbar bzw. die Probenhalterung in radialer Richtung bezüglich der optischen Achse der Fokussierungsoptik verschiebbar. Dadurch wird eine zweidimensionale Ortsauflösung mittels einer einfachen mechanischen Bewegung der Fokussierungsoptik bzw. des Probenhalters ohne Veränderung des Winkels der Strahlachse relativ zur Probenoberfläche erzielt. Daher wird gemäß dieser vorteilhaften Weiterbildung auch in der zweiten Dimension die sehr gute Ortsauflösung erreicht. Auch in dieser Ausführungsform ist das zuvor erwähnte kostengünstige Objektiv mit geringem Durchmesser und geringem Aufwand in der Bildfeldkorrektur verwendbar.

Gemäß einer weiteren vorteilhaften Weiterbildung sind zwei oder mehrere jeweils einander zugeordnete Paare der Fokussierungsoptik und der Nachweiseinheit vorgesehen. Dadurch lässt sich die Abtastzeit insbesondere bei Verwendung großer Proben und hoher Auflösung beträchtlich verringem. Bei Verwendung von zwei Paaren aus Fokussierungsoptik und Nachweiseinheit wird die Abtastzeit der Probenfläche halbiert. Dabei ist es bevorzugt, dass die beiden Paare aus Fokussierungsoptik und Nachweiseinheit einen Abstand ihrer optischen Wege aufweisen, der gleich dem halben Radius der Gesamtabtastfläche ist. Insbesondere ist es vorteilhaft, wenn die Paare der Fokussierungsoptik und der Nachweiseinheit mechanisch miteinander gekoppelt sind. In diesem Fall werden durch die mechanische Kopplung Stellelemente zur radialen Verschiebung der Fokussierungsoptik eingespart, wodurch wiederum die Kosten der erfindungsgemäßen Lichtabtastvorrichtung verringert werden, und andererseits wird durch die starre mechanische Verbindung eine genauere Positionierung gewährleistet.

Bei der gleichzeitigen Verwendung mehrerer Detektoren ist es vorteilhaft, Lochblenden jeweils in einer Abbildungsebene einer Erfassungsoptik vor der entsprechenden Detektorvorrichtung vorzusehen. Dadurch kann ein Übersprechen zwischen den einzelnen Detektoren und eine Aufnahme von Streulicht aus der Umgebung des Anregungslichtflecks verhindert werden.

Schließlich können in der erfindungsgemäßen Lichtabtastvorrichtung mehrere Lichtquellen mit verschiedenen Emissionslichtwellenlängen und/oder Farbfilter unterschiedlicher Transmissionswellenlänge vor den einzelnen Detektorvorrichtungen vorgesehen werden, was die Flexibilität und Vielseitigkeit des Systems erhöht.

Gemäß einem ersten Aspekt der Erfindung wird eine Lichtabtastvorrichtung zur Anregung und Detektion von Sekundärlicht, insbesondere von Fluoreszenzlicht, auf einer Probe bereitgestellt. Die Lichtabtastvorrichtung umfasst eine Lichtemissionsvorrichtung zur Aussendung von Anregungslicht mit einer für eine Sekundärlichtanregung auf oder in der Probe geeigneten Wellenlänge, eine Fokussierungsoptik zur Fokussierung des Anregungslichts auf ein Teilgebiet der Probe, eine Probenhalterungsvorrichtung zur lösbaren Halterung der Probe und eine Nachweiseinheit mit einer Erfassungsoptik für das bei Anregung von der Probe emittierte Sekundärlicht und mit einer Detektorvorrichtung zur Umwandlung des erfassten und abgebildeten Sekundärlichts in elektrische Signale. Die Probenhalterungsvorrichtung ist drehbar zur Drehung der Probe relativ zu dem Anregungslicht derart, dass unterschiedliche Teilgebiete der Probe mit dem Anregungslicht zur Aussendung von Sekundärlicht anregbar sind.

Gemäß einem zweiten Aspekt der Erfindung wird eine Lichtabtastvorrichtung zur Anregung und Detektion von Sekundärlicht, insbesondere von Fluoreszenzlicht, auf einer Probe bereitgestellt. Die Lichtabtastvorrichtung umfasst eine Lichtemissionsvorrichtung zur Aussendung von Anregungslicht mit einer für eine Sekundärlichtanregung auf oder in der Probe geeigneten Wellenlänge, eine Fokussierungsoptik zur Fokussierung des Anregungslichts auf ein Teilgebiet der Probe, eine Probenhalterungsvorrichtung zur lösbaren Halterung der Probe, eine Nachweiseinheit mit einer Erfassungsoptik für das bei Anregung von der Probe emittierte Sekundärlicht und mit einer Detektorvorrichtung zur Umwandlung des erfassten und abgebildeten Sekundärlichts in elektrische Signale. Die Fokussierungsoptik ist drehbar gehaltert zur Führung des Anregungslichts entlang eines Kreisbogens auf der Probe.

Gemäß einer Ausführungsform des ersten Aspektes der Erfindung ist die Fokussierungsoptik radial bezüglich einer Drehachse der Probenhalterungsvorrichtung verschiebbar.

Gemäß einer Ausführungsform des zweiten Aspektes der Erfindung ist die Probenhalterung in radialer Richtung bezüglich einer Drehachse der Fokussierungsoptik verschiebbar.

Gemäß einer weiteren Ausführungsform der vorstehenden Aspekte sind die Nachweiseinheit und die Fokussierungsoptik zusammengekoppelt und weisen wenigstens teilweise einen gemeinsamen optischen Weg auf.

Gemäß einer weiteren Ausführungsform des zweiten Aspektes weist die Fokussierungsoptik und die Erfassungsoptik der Nachweiseinheit einen gemeinsamen Strahlteiler auf, um die optischen Wege des Anregungslichts und des Sekundärlichts zu vereinen bzw. zu trennen.

Gemäß einer weiteren Ausführungsform des zweiten Aspektes ist der Strahlteiler ein dichroitischer Strahlteiler, der entweder das Anregungslicht oder das Sekundärlicht reflektiert und das andere Licht im wesentlichen transmittiert.

Gemäß einer weiteren Ausführungsform des zweiten Aspektes reflektiert und transmittiert der Strahlteiler das auf ihn einfallende Licht in einem Verhältnis von 50:50.

Gemäß einer weiteren Ausführungsform der vorstehenden Aspekte der Erfindung sind wenigstens zwei jeweils einander zugeordnete Paare der Fokussierungsoptik und der Nachweiseinheit vorgesehen.

Gemäß einer weiteren Ausführungsform der vorstehenden Aspekte der Erfindung sind die Paare der Fokussierungsoptik und der Nachweiseinheit mechanisch miteinander gekoppelt.

Gemäß einer weiteren Ausführungsform der vorstehenden Aspekte der Erfindung ist vor der Detektorvorrichtung eine Lochblende in einer Abbildungsebene der Erfassungsoptik für das Sekundärlicht vorgesehen.

Gemäß einer weiteren Ausführungsform der vorstehenden Aspekte der Erfindung ist ein Sperrfilter zur Unterdrückung des Anregungslichts vor der Detektorvorrichtung vorgesehen.

Gemäß einer weiteren Ausführungsform der vorstehenden Aspekte der Erfindung sind die Detektorvorrichtung und/oder die Lichtemissionsvorrichtung fixiert vorgesehen.

Gemäß einer weiteren Ausführungsform der vorstehenden Aspekte der Erfindung sind die Detektorvorrichtung und/oder die Lichtemissionsvorrichtung mit der Erfassungsoptik bzw. der Fokussierungsoptik zur Lichtübertragung über Lichtleitfasern gekoppelt.

Gemäß einer weiteren Ausführungsform der vorstehenden Aspekte der Erfindung ist ein Farbfilter zur Transmission einer bestimmten Wellenlänge des Sekundärlichts vor der Detektorvorrichtung vorgesehen.

Gemäß einer weiteren Ausführungsform der vorstehenden Aspekte der Erfindung umfasst die Lichtemissionsvorrichtung eine Vielzahl von Laserdioden mit jeweils unterschiedlicher Ausgangswellenlänge.
Weitere vorteilhafte Ausführungsformen gehen aus den Unteransprüchen hervor.

Nachfolgend wird die vorliegende Erfindung beispielhaft anhand eines bevorzugten Ausführungsbeispiels näher erläutert und beschrieben. In den begleitenden Zeichnungen zeigen:
- Fig. 1: eine schematische Ansicht eines Aufbaus einer erfindungsgemäßen Ausführungsform; und
- Fig. 2: eine schematische Darstellung einer weiteren Ausführungsform der vorliegenden Erfindung.

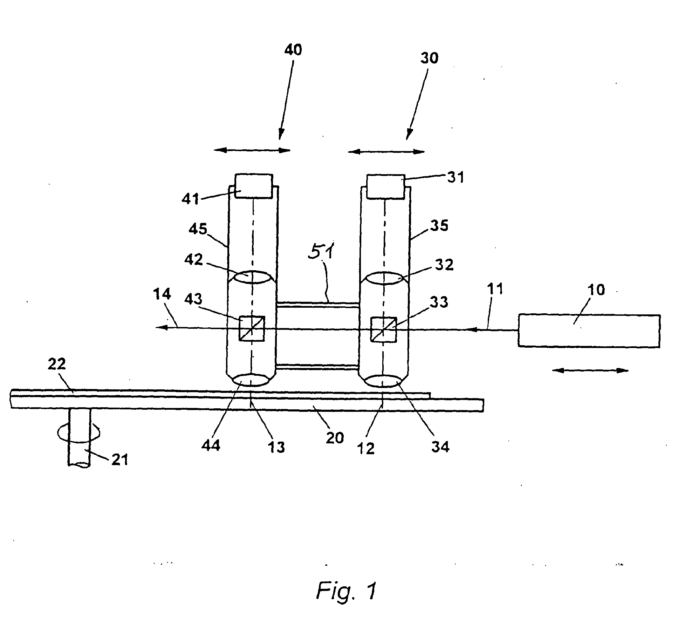

In Fig. 1 ist eine Ausführungsform der erfindungsgemäßen Lichtabtastvorrichtung schematisch dargestellt. Eine Lichtemissionsvorrichtung 10, bei der es sich z.B. um einen Laser handelt, emittiert einen Lichtstrahl 11, der auf eine erste Einheit 30 mit einer Fokussierungsoptik für den Lichtstrahl und einer Erfassungsoptik für das Sekundärlicht trifft. Die erste Einheit 30 umfasst einen Trägerkörper 35 zur Halterung eines Strahlteilerwürfels 33, eines Fokussierungsobjektivs 34 zur Fokussierung des von der Lichtemissionsvorrichtung 10 emittierten Lichts auf die Probe, eines Erfassungsobjektivs 32 zur Erfassung und Sammlung von Sekundärlicht und eines Detektors 31. Der Trägerkörper 35 besitzt entlang des Ausbreitungswegs des Emissionslichtstrahlenbündels 11 Ausnehmungen, die einen Durchgang des Lichtstrahlenbündels 11 erlauben. Im optischen Weg des Lichtstrahlenbündels 11 ist der Strahlteiler 33 so angeordnet, dass das Strahlenbündel 11 teilweise im wesentlichen senkrecht reflektiert wird und anschließend entlang einer durch das Fokussierungsobjektiv 34 verlaufenden optischen Achse 12 verläuft. Der durch den Strahlteiler 33 transmittierte Teil des Strahlenbündels verlässt an einer entsprechenden zweiten Ausnehmung den Trägerkörper 35 und trifft auf eine zweite Einheit 40, die im wesentlichen zur ersten Einheit 30 identisch aufgebaut ist.

Die zweite Einheit 40 umfasst somit einen Detektor 41, ein Erfassungsobjektiv 42 zur Erfassung und Sammlung des Sekundärlichts, einen Strahlteiler 43 und eine Fokussierungsoptik 44, die sämtlich in einem Trägerkörper 45 gehaltert sind. Der Trägerkörper 45 weist wieder geeignet angeordnete Ausnehmungen zum Eintritt und Austritt des von der Lichtemissionsvorrichtung 10 erzeugten, sich geradlinig ausbreitenden Strahlenbündels 11 auf.

In der gezeigten Ausführungsform sind die beiden Einheiten 30 und 40 mittels einer starren Verbindung 51 mechanisch gekoppelt. Wie durch die horizontalen Pfeile angezeigt ist, sind die Einheiten 30 und 40 gemeinsam entlang der Ausbreitungsrichtung des nicht abgelenkten, von der Emissionsvorrichtung 10 emittierten Strahlenbündels 11 verschiebbar.

Gegenüberliegend zu den beiden Fokussierungsobjektiven 34 und 44 ist eine Probe 22 angeordnet, die auf einer Probenhalterung 20 lösbar gehaltert ist. Die Probenhalterung 20 ist in der gezeigten Ausführungsform ein an einer Drehachse 21 gehalterter Drehteller. Zur Halterung der Probe 22 auf dem Drehteller 20 können nicht gezeigte Aufspannelemente oder Vakuumansaugleitungen vorhanden sein, wobei jedoch meist die normale Reibung der Probe auf der Unterlage genügt.

In der in Fig. 1 gezeigten Ausführungsform ist der Abstand zwischen den Einheiten 30 und 40 der halbe Radius des auf der Probe 22 abzutastenden Gebiets.

Der optische Weg des von der Lichtemissionsvorrichtung 10 emittierten Lichtstrahlenbündels 11 verläuft zuerst im wesentlichen parallel zur Oberfläche der Probe 22 und wird jeweils an den Strahlteilern 33 und 43 in eine Richtung im wesentlichen senkrecht zur Oberfläche der Probe 22 abgelenkt, um das Anregungslicht über die Fokussierungsobjektive 34 und 44 auf zwei Stellen der Probenoberfläche zu fokussieren. Das bei Fluoreszenz von der Probenoberfläche abgestrahlte Sekundärlicht geht in den oberen Halbraum (falls die Probenhalterung 20 absorbiert). Davon wird nur derjenige Teil für den Detektor genutzt, der von der Optik 34, 32 bzw. 44, 42 aufgenommen werden kann. Nach Sammlung durch die Fokussierungsobjektive 34 und 44 geht das Sekundärlicht zu den Strahlteilern 33 und 43 über. An den Strahlteilern 33 und 43 werden die zwischen der Probe 22 und den beiden Strahlteilern für das Anregungslicht und das Sekundärlicht vereinten optischen Wege getrennt. Ein Teil des Sekundärlichts wird jeweils an den Strahlteilern 33 und 43 in Richtung der Lichtemissionsvorrichtung 10 reflektiert, während ein anderer Teil durch die Strahlteilerwürfel durchgeht und auf die jeweiligen Erfassungsobjektive 32 und 42 trifft, die das Sekundärlicht auf den entsprechenden Detektor 31 bzw. 41 abbilden.

Man kann einen polarisierenden Strahlteilerwürfel einsetzen, der ein polarisiertes Anregungslicht mit hoher Reflektivität in Richtung der Proben reflektiert. Die fluoreszierenden Moleküle sind statistisch ("random") verteilt und emittieren in alle Polarisationsrichtungen. Daher wird in Richtung der Lichtemissionsvorrichtung 10 nur wenig reflektiert, während das meiste Licht durch den Strahlteiler geht.

In der gezeigten Ausführungsform bei Verwendung von zwei Einheiten 30 und 40 besitzen die Strahlteiler beispielsweise ein Aufteilungsverhältnis von 50:50.

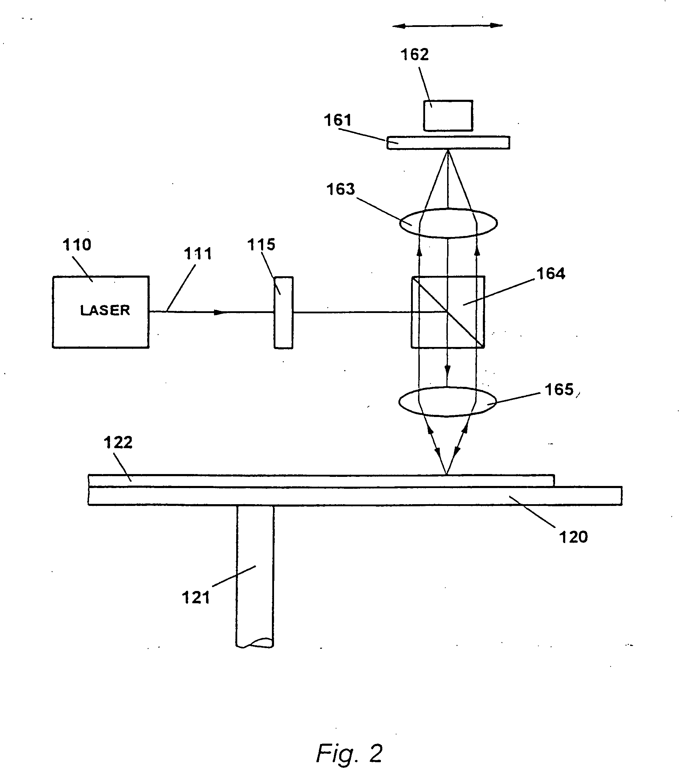

In Fig. 2 ist eine weitere Ausführungsform der erfindungsgemäßen Lichtabtastvorrichtung gezeigt. Eine Lichtemissionsvorrichtung 110, z.B. ein Laser, erzeugt ein Anregungslichtstrahlenbündel 111, das auf eine schematisch dargestellte Strahlaufweitungsoptik 115 zur Aufweitung des Anregungslichtstrahlenbündels trifft. Die Strahlaufweitungsoptik 115 kann gleichzeitig zur Verbesserung der Strahlqualität einen Raumfilter enthalten. Anschließend folgt im optischen Weg des Anregungslichtstrahls ein dichroitischer Strahlteiler 164, der das Anregungslicht nahezu vollständig unter einem rechten Winkel in Richtung auf eine Probe 122 reflektiert. Zwischen dem Strahlteiler und der Probe 122 ist ein Fokussierungsobjektiv 165 angeordnet, das das Anregungslicht auf einen kleinen Fleck auf der Probe fokussiert.

Die Probe 122 ist wieder wie in der vorherigen Ausführungsform auf einem Drehteller 120 lösbar angebracht, der über eine Drehachse 121 drehbar gehaltert ist.

Im optischen Weg des von der Probe 122 emittierten Fluoreszenzlichts liegt zuerst die Fokussierungsoptik 165, auf die der dichroitische Strahlteiler 164 folgt, der so entworfen ist, dass das sich in der Wellenlänge vom Anregungslicht unterscheidende Fluoreszenzlicht nahezu vollständig transmittiert wird zu einer Erfassungsoptik 163, die das Fluoreszenzlicht auf eine Lochblende 161 fokussiert, hinter der ein Detektor 162 angeordnet ist.

Zusätzlich zu den in den Figuren 1 und 2 gezeigten Elementen der oben beschriebenen Ausführungsformen kann ein Sperrfilter zur Unterdrückung von Streulicht von der Lichtemissionsvorrichtung vor den jeweiligen Detektoren vorgesehen sein. Durch das Sperrfilter und die Lochblende (die selbstverständlich auch vor den Detektoren 31 und 41 der in Fig. 1 gezeigten Ausführungsform vorsehbar ist) wird eine starke Unterdrückung von gestreutem Anregungslicht erzielt und das Signal-zu-Rauschverhältnis deutlich verbessert. In der in Fig. 2 gezeigten Ausführungsform ist das Fokussierungsobjektiv 165 zusammen mit den Strahlteiler 164, dem Erfassungsobjektiv 163, der Lochblende 161 und dem Detektor 162 entlang der optischen Achse des Anregungslichtstrahlenbündels 111 zwischen Lichterzeugungsvorrichtung und Strahlteiler verschiebbar.

An der Lochblende 161 könnte auch ein Emissionsfilter eingesetzt werden, um die Wellenlänge des Emissionslichts zu selektionieren.

In den beiden gezeigten Ausführungsformen wäre es auch möglich, die Anordnung von Laser und Nachweisoptik unter entsprechender Umorientierung des Strahlteilers zu vertauschen. Weiter wäre es möglich, anstelle der Drehbewegung der Probenhalterung und der Linearbewegung der Fokussierungs- und Nachweiseinheit die Drehbewegung bei letzterer vorzusehen, und stattdessen die Probe linear verschiebbar anzuordnen, wodurch wiederum das gesamte Probengebiet abrasterbar wäre.

Bei den gezeigten Ausführungsformen wäre es weiter möglich, die Lichtemissionsvorrichtung und/oder die Nachweiseinheit(en) fixiert anzuordnen und das Licht über flexible Lichtleitfasern an die verschiebbare Fokussierungsoptik zu koppeln. Bei Verwendung von Lichtleitfasem zur Einkopplung des Anregungslichts und zur Übertragung des von der Probe emittierten Fluoreszenzlichts zum Detektor könnte der Strahlteiler entfallen. Eine derartige Verwendung von Lichtleitfasern bei der in Fig. 1 gezeigten Ausführungsform ermöglicht eine fixierte Anordnung der Detektoren 31 und 41 bezüglich der Verschiebebewegung des Fokussierungsobjektivs, wobei eine flexible Verbindung zwischen den Detektoren und der Fokussierungsoptik mittels der Lichtleitfasern hergestellt würde.

Bei Verwendung mehrerer Fokussierungs- und Nachweiseinheiten ist es auch möglich, unterschiedliche Wellenlängenfilter vor den jeweiligen Detektoren vorzusehen, wodurch verschiedene Fluorophore oder mehrere Wellenlängen des gleichen Fluoreszenzfarbstoffs simultan gemessen werden können. Andererseits kann man unterschiedliche Lichtemissionsvorrichtungen vorsehen, die jeweils über einen eigenen Strahlengang eingekoppelt werden und verschiedene Anregungswellenlängen zur Anregung verschiedener Fluoreszenzfarbstoffe aufweisen. Damit ist es ebenfalls möglich, die Probe bezüglich verschiedener Farbstoffe gleichzeitig zu vermessen.

Anstatt den in Fig. 1 und 2 gezeigten reflektiven Anordnungen wäre auch eine Anordnung zur Messung in Transmission denkbar. In diesem Fall würden die Strahlteilerwürfel jeweils entfallen und die Nachweiseinheiten auf der der Anregungsseite gegenüberliegenden Seite der Probe und des in diesem Fall transparenten Probenhalters angeordnet sein. Die Nachweisoptik wäre dann mit der Linearbewegung des oder der Anregungslichtstrahlenbündel auf der Probe 22 entsprechend gekoppelt.

Speziell bei Verwendung einer oder mehrerer Laserdioden als Lichtemissionsvorrichtung ist die Verwendung einer Strahlformungsoptik, wie symbolisch mit Bezugszeichen 115 in Fig. 2 angezeigt, vorteilhaft.

Die Probe ist mittels eines Mikrospotauftragungsverfahrens auf einem Träger aufgebracht, der auf der Probenhalterung lösbar angebracht ist. Der Träger kann eine kreisrunde Scheibe sein oder auch eine beliebige andere flache Form besitzen. Zur Probenaufgabe auf den Träger werden Mikrodosiertechniken, z.B. unter Verwendung einer Mikrodroppiezotechnologie, verwendet. Damit ist es möglich, einzelne Spotproben im Bereich von typischerweise 30 bis 100 µm Durchmesser aufzutragen.

Die Erfindung schafft den wesentlichen Vorteil, dass die Positionierung des Abtastlichtstrahlenbündels auf der Probe aufgrund der Rotationsbewegung bzw. der Linearbewegung genauer steuerbar ist als mittels einer Verkippung der Kippspiegel gemäß dem Stand der Technik, bei denen eine Verstärkung einer Positionstoleranz wie bei einem Spiegelgalvanometer auftrat. Durch die Verwendung mehrerer Detektoren kann die Abtastzeit wesentlich verkürzt werden, wobei die starre Verbindung der Abbildungs- und Erfassungsoptiken zu einer Verbesserung der Positionierung führt. Die konfokal vor den Detektoren angeordneten Lochblenden verhindern das Übersprechen der den beiden Detektoren zugeordneten Kanäle und unterdrücken Streulicht aus der Umgebung des Anregungslichtspots, wodurch das Signal-zu-Rauschverhältnis verbessert wird. Die Möglichkeit, mehrere Lichtemissionsvorrichtungen und verschiedene Filter einzusetzen, erhöht die Flexibilität des Systems.

## Patentansprüche

1. Lichtabtastvorrichtung, welche umfasst:
eine Probenhalterungsvorrichtung (120) zur lösbaren Halterung einer Probe (122), und optische Elemente, welche umfassen:
eine Vielzahl von Lichtquellen (110), wobei jede Lichtquelle ein Anregungslicht mit Emissionslichtwellenlängen (111) bereitstellt, welche zur Anregung unterschiedlicher Fluorophore in der Probe (122) und zur Erzeugung von Fluoreszenzlicht geeignet sind;
eine Fokussierungsoptik (165) zur Fokussierung des Anregungslichtes auf ein Teilgebiet der Probe (122);
eine Nachweiseinheit mit einer Erfassungsoptik (163) zur Fokussierung von Fluoreszenzlicht, welches durch die unterschiedlichen Fluorophore emittiert wird und einem Detektor (162) zur Umwandlung des fokussierten Fluoreszenzlichts in elektrische Signale;
wobei die Probenhalterungsvorrichtung und die Fokussierungsoptik (34, 44) eingerichtet sind, eine relative Bewegung zwischen den optischen Elementen und der Probenhalterung (120) in Form einer kreisförmigen und linearen Bewegung zu ermöglichen, um unterschiedliche Teilgebiete der Probe (122) mit dem Anregungslicht zur Aussendung von Fluoreszenzlicht anzuregen, wobei die kreisförmige Bewegung durch Drehung der Probenhalterungsvorrichtung um eine Drehachse (21) oder durch Drehung der Fokussierungsoptik (34, 44) erreicht wird und die lineare Bewegung jeweils durch lineare Verschiebung der Fokussierungsoptik radial bezüglich der Drehachse der Probenhalterungsvorrichtung oder durch lineare Verschiebung der Probenhalterungsvorrichtung in radialer Richtung bezüglich der Drehachse der Fokussierungsoptik erreicht wird.

2. Lichtabtastvorrichtung, welche umfasst:
eine Probenhalterungsvorrichtung (120) zur lösbaren Halterung einer Probe (122), und optische Elemente, welche umfassen:
eine Lichtquelle (110), geeignet zur Anregung unterschiedlicher Fluorophore in der Probe (122) mit Anregungslicht (11);
eine Fokussierungsoptik (165) zur Fokussierung des Anregungslichtes (11) auf ein Teilgebiet der Probe (122);
eine Nachweiseinheit mit einer Erfassungsoptik (163) zur Fokussierung von Fluoreszenzlicht, welches durch die unterschiedlichen Fluorophore emittiert wird und
einer Vielzahl von Detektoren (162) zur Umwandlung des fokussierten Fluoreszenzlichts in elektrische Signale; und
eine Vielzahl von Farbfiltern unterschiedlicher Transmissionswellenlängen vor den einzelnen Detektoren, geeignet für die verschiedenen Fluorophore in der Probe (122);
wobei die Probenhalterungsvorrichtung und die Fokussierungsoptik (34, 44) eingerichtet sind, eine relative Bewegung zwischen den optischen Elementen und der Probenhalterungsvorrichtung (120) in Form einer kreisförmigen und linearen Bewegung zu ermöglichen, um unterschiedliche Teilgebiete der Probe (122) mit dem Anregungslicht zur Aussendung von Fluoreszenzlicht anzuregen, wobei die kreisförmige Bewegung durch Drehung der Probenhalterungsvorrichtung um eine Drehachse (21) oder durch Drehung der Fokussierungsoptik (34, 44) erreicht wird und die lineare Bewegung jeweils durch lineare Verschiebung der Fokussierungsoptik radial bezüglich der Drehachse der Probenhalterungsvorrichtung oder durch lineare Verschiebung der Probenhalterungsvorrichtung in radialer Richtung bezüglich einer Drehachse der Fokussierungsoptik erreicht wird.

3. Lichtabtastvorrichtung gemäß einem der Ansprüche 1 bis 2, wobei die Fokussierungsoptik (34, 44) und die Erfassungsoptik (163) der Nachweiseinheit einen gemeinsamen Strahlteiler (164) umfassen, um die optischen Wege des Anregungslichtes (11) und des Fluoreszenzlichts zu vereinen bzw. zu trennen.

4. Lichtabtastvorrichtung gemäß einem der vorhergehenden Ansprüche, wobei vor den Detektorvorrichtungen eine Lochblende in einer Abbildungsebene der Erfassungsoptik für das Fluoreszenzlicht vorgesehen ist, welche eingerichtet ist, um die Aufnahme von Streulicht aus der Umgebung des anregenden Lichtpunktes zu verhindern.
